# NEUE EUROPÄISCHE PATENTSCHRIFT

(11) **EP 2 558 643 B2**
(45) Veröffentlichungstag und Bekanntmachung des Hinweises auf die Entscheidung über den Einspruch: **23.12.2020**
(45) Hinweis auf die Patenterteilung: 24.12.2014
(21) Anmeldenummer: 11715663.8
(22) Anmeldetag: 14.04.2011
(51) Int. Cl.: E01C 19/00, E01C 19/48, E01C 23/088, E01C 23/01, E01C 23/07

(54) **ÜBERWACHUNGSVORRICHTUNG FÜR EINE BODENBEARBEITUNGSMASCHINE**
MONITORING APPARATUS FOR A SOIL-WORKING MACHINE
DISPOSITIF DE SURVEILLANCE POUR UNE MACHINE DE TRAVAIL DU SOL

(30) Priorität: 14.04.2010 DE 102010014903
(43) Veröffentlichungstag der Anmeldung: 20.02.2013
(73) Patentinhaber: BOMAG GmbH, 56154 Boppard (DE)
(72) Erfinder: WACHSMANN, Steffen, 56068 Koblenz (DE); LAUX, Robert, 56566 Neuwied (DE)
(74) Vertreter: Heidler, Philipp
(86) Internationale Anmeldenummer: PCT/EP2011/001910
(87) Internationale Veröffentlichungsnummer: WO 2011/128105

(56) Entgegenhaltungen:
- EP-A1- 2 037 042
- EP-A2- 2 161 375
- WO-A1-02/46533
- WO-A1-03/064770
- WO-A1-2004/074579
- DE-A1- 3 738 221
- DE-A1- 10 203 732
- DE-A1- 19 730 414
- DE-A1-102007 007 970
- US-A- 5 947 636
- US-A1- 2008 234 900

## Beschreibung

Die Erfindung betrifft eine Überwachungsvorrichtung für eine Bodenbearbeitungsmaschine, wobei diese Bodenbearbeitungsmaschine wenigstens eine Bearbeitungseinrichtung für die mechanische Bearbeitung der Bodenoberfläche und/oder für die Erzeugung einer Bodendeckschicht aufweist. Die Erfindung betrifft insbesondere eine Überwachungsvorrichtung für eine Bodenfräsmaschine, wobei diese Bodenfräsmaschine wenigstens eine mit einer Vielzahl von Fräsmeißeln bestückte Fräswalze aufweist. Die Erfindung betrifft ferner eine Bodenbearbeitungsmaschine mit wenigstens einer solchen Überwachungsvorrichtung.

Die von einer Bodenbearbeitungsmaschine erzeugte Beschaffenheit einer Bodenoberfläche und/oder einer Bodendeckschicht erlaubt Rückschlüsse auf den Bearbeitungsvorgang und/oder auf den Zustand der Bodenbearbeitungsmaschine bzw. deren Bearbeitungseinrichtung. So kann z. B. die Veränderung des von einer Bodenfräsmaschine erzeugten Fräsbildes in der Bodenoberfläche ein Hinweis auf einen fortgeschrittenen Verschleiß der Fräsmeißel oder sogar auf einen Meißelbruch sein. Die Überwachung des Arbeitsergebnisses bei einer Bodenbearbeitungsmaschine durch Erfassung der erzeugten Beschaffenheit von Bodenoberfläche und/oder Bodendeckschicht ist daher sinnvoll. Aus der WO 02/46533 A1 ist dazu beispielsweise die Verwendung einer Laser-Regeleinrichtung an einem Straßenfertiger bekannt, mit der die Höhe der Eine Bohle gegenüber einer Referenzebene berechnet und abhängig von der berechneten Höhe eine Soll-Höhe für die Bohle ermittelt und eingestellt wird.

In der DE 102 03 732 A1 wird vorgeschlagen, den Betriebszustand eines am Fräsprozess direkt oder indirekt beteiligten Maschinenbauteils einer Bodenfräsmaschine während des Arbeitsbetriebs zu erfassen und zu überwachen. Sobald ein ermittelter Kennwert eine unzulässige Abweichung von einem Sollwert aufzeigt, wird dies dem Maschinenführer angezeigt, der erst hierauf hin die Fräsmeißel inspizieren und gegebenenfalls auswechseln kann. Nachteilig hierbei ist, dass das von den Fräsmeißeln bzw. der Fräswalze erzeugte Fräsbild in der Bodenstruktur unberücksichtigt bleibt. In der DE 102 03 732 A1 wird daher ferner vorgeschlagen, das erzeugte Fräsbild mittels einer Kamera optisch zu erfassen und über ein Bildschirmgerät dem Maschinenführer anzuzeigen. Dieser kann am Bildschirmgerät die Qualität des erzeugten Fräsbildes kontrollieren, was jedoch eine permanente Aufmerksamkeit des Maschinenführers erfordert.

Eine Aufgabe der Erfindung ist es, Möglichkeiten zum optimierten Arbeitsbetrieb einer Bodenbearbeitungsmaschine der eingangs genannten Art aufzuzeigen.

Diese Aufgabe wird gelöst von einer Überwachungsvorrichtung und mit einer Bodenfräsmaschine gemäß den unabhängigen Ansprüchen. Eine solche Bodenfräsmaschine ist z. B. eine Straßenfräsmaschine. Bevorzugte Weiterbildungen und Ausgestaltungen sind in den jeweils abhängigen Ansprüche angegeben.

Zur Lösung der Aufgabe wird eine Überwachungsvorrichtung für eine Bodenbearbeitungsmaschine gemäß dem unabhängigen Anspruch 1 vorgeschlagen. Diese Bodenbearbeitungsmaschine weist wenigstens eine als Fräswalze ausgebildete Bearbeitungseinrichtung für die mechanische Bearbeitung der Bodenoberfläche auf, mit wenigstens einer Erfassungseinrichtung, zur berührungslosen und zumindest bereichsweisen Erfassung einer von der Fräswalze erzeugten Beschaffenheit der Bodenoberfläche, insbesondere des Fräsbildes, und mit wenigstens einer Auswerteeinrichtung, zur automatisierten Auswertung der von der Erfassungseinrichtung erfassten Beschaffenheit. Die Erfassungseinrichtung kann kontinuierlich oder diskontinuierlich, z. B. in definierten Zeitabständen, die Beschaffenheit erfassen.

Beim Erfassen wird im weitesten Sinne eine elektronische Darstellung der realen Beschaffenheit generiert und dann der Auswerteeinrichtung zugeführt, welche diese automatisch auswertet und hierbei z. B. mit Sollvorgaben und/oder mit vorausgehenden Erfassungen vergleicht. Eine erkannte unzulässige Beschaffenheit kann dem Maschinenführer angezeigt und/oder an ein Steuergerät der Bodenbearbeitungsmaschine übermittelt werden, welches dann z. B., gegebenenfalls in Zusammenwirkung mit der Überwachungsvorrichtung, geeignete Gegenmaßnahmen einleitet, um eine gewünschte Beschaffenheit oder eine Beschaffenheit gemäß Vorgaben zu erreichen. Der Begriff "Beschaffenheit" soll im Rahmen der Erfindung insbesondere die oberflächliche Ausformung und Struktur und/oder das Profil der von der Fräswalze erzeugten Bodenoberfläche und/oder Bodendeckschicht umfassen, konkret das von der Fräswalze erzeugte sogenannte Fräsbild.

Die vorgeschlagene Überwachungsvorrichtung dient z. B. zur Überwachung an einer Bodenstabilisiermaschine (z. B. Bodenstabilisator).

Die vorgeschlagene Überwachungsvorrichtung kann z. B. auch zur Überwachung an einer Bodenrecyclingmaschine (z. B. Straßen-Recycler) dienen.

Bevorzugt ist vorgesehen, dass die Erfassungseinrichtung auf dem Prinzip einer optischen Abbildung oder Abtastung basiert, bzw. nach diesem Prinzip arbeitet. Insbesondere ist vorgesehen, dass die Erfassungseinrichtung wenigstens eine Kamera aufweist und die Auswerteeinrichtung wenigstens ein Bildverarbeitungsmodul umfasst. Ebenso kann vorgesehen sein, dass die Erfassungseinrichtung auf dem Prinzip einer Abtastung mittels Laser, Infrarot, Schall, Röntgenstrahlung, Funkwellen oder dergleichen basiert, bzw. nach einem dieser Prinzipien arbeitet. Des weiteren ist bevorzugt vorgesehen, dass die Erfassungseinrichtung auf dem Prinzip einer flächigen Abbildung, flächigen Abtastung und/oder linieförmigen Abtastung basiert, bzw. nach einem dieser Prinzipien arbeitet. Im Übrigen gelten analog auch die nachfolgenden Erläuterungen im Zusammenhang mit einer erfindungsgemäßen Überwachungsvorrichtung für eine Bodenfräsmaschine.

Erfindungsgemäß ist vorgesehen, dass die Bodenfräsmaschine wenigstens eine mit einer Vielzahl von Fräsmeißeln bestückte Fräswalze, wenigstens eine Erfassungseinrichtung zur berührungslosen und zumindest bereichsweisen Erfassung des von der Fräswalze bzw. den Fräsmeißeln erzeugten Fräsbildes, und (wenigstens) eine Auswerteeinrichtung zur automatisierten Auswertung des von der Erfassungseinrichtung erfassten Fräsbildes aufweist. Die Erfassungseinrichtung kann kontinuierlich oder diskontinuierlich, z. B. in definierten Zeitabständen, das von der Fräswalze erzeugte Fräsbild erfassen. Hierbei wird im weitesten Sinne ein elektronisches Abbild (das auch aus mehreren Einzelbildern oder einer Bildsequenz bestehen kann) von dem real erzeugten Fräsbild generiert und der Auswerteeinrichtung zugeführt, welche das erfasste Fräsbild insbesondere in Hinblick auf Verschleißerscheinungen und/oder Ausfallerscheinungen an den Fräsmeißeln auswertet. Ferner ist auch eine automatisierte Qualitätsbeurteilung des erzeugten Fräsbildes möglich. Zur Erfassungseinrichtung kann ein Aufbereitungsmodul für die erfassten Daten gehören. Bei der Auswerteeinrichtung kann es sich z. B. um eine Computereinrichtung (oder dergleichen) mit einer implementierten für die erfindungsgemäße Auswertung geeigneten Software handeln.

Diese Überwachungsvorrichtung ist für die Verwendung an einer Bodenfräsmaschine mit wenigstens einer Fräswalze, wobei diese Fräswalze mit wenigstens einem und bevorzugt mit einer Vielzahl von insbesondere austauschbaren Fräsmeißeln oder auch Fräsmessern bestückt ist, ausgebildet. Solche Bodenfräsmaschinen zum Abtragen einer Bodenoberfläche, insbesondere zum Abtragen der Oberfläche bzw. Deckschicht eines Straßenbelags, sind aus dem Stand der Technik bekannt. Während des Arbeitsbetriebs bzw. während des Fräsprozesses rotiert die Fräswalze, wobei die Fräsmeißel in Eingriff mit der zu bearbeitenden Bodenoberfläche gelangen und diese zumindest teilweise abtragen. Die Fräsmeißel sind hierbei einem fortwährenden Verschleiß unterworfen. Ferner kann es z. B. durch Meißelbruch zu einem frühzeitigen Ausfall eines Fräsmeißels kommen. In beiden Fällen sind markante und insbesondere auch sichtbare Veränderungen des Fräsbildes die Folge.

Erfindungsgemäß ist die Auswerteeinrichtung dazu ausgebildet, den Verschleiß und/oder den Ausfall wenigstens eines Fräsmeißels anhand des Vergleichs eines momentan erfassten Fräsbildes mit einem zeitlich früher erfassten Fräsbild zu ermitteln. Eine solche Vorgehensweise ist z. B. bei einer kontinuierlichen Erfassung des erzeugten Fräsbildes geeignet. Alternativ und/oder ergänzend hierzu kann das erfasste Fräsbild mit einem bspw. in einer Datenbank hinterlegten Soll-Fräsbild oder Ideal-Fräsbild verglichen werden.

Erfindungsgemäß wird in vorteilhafter Weise das von der Fräswalze bzw. den Fräsmeißeln real erzeugte Fräsbild erfasst und einer Auswertung zugeführt, wobei letztlich genau dieses erzeugte Fräsbild von entscheidendem Interesse ist. Aufgrund der automatisierten Auswertung ist keine manuelle Überwachung erforderlich, so dass der Maschinenführer seine Aufmerksamkeit auf andere Vorgänge, wie z. B. die Lenkung der Bodenfräsmaschine, richten kann. Ferner ist eine objektive Qualitätsbewertung des erzeugten Fräsbildes, unabhängig von subjektiven Kriterien des Maschinenführers, möglich.

Nach einer bevorzugten Weiterbildung ist die Auswerteeinrichtung dazu ausgebildet, automatisch den Verschleiß und/oder den frühzeitigen Ausfall wenigstens eines Fräsmeißels anhand des erfassten Fräsbildes zu bestimmen bzw. zu ermitteln. Die Überwachungsvorrichtung kann insofern auch als Fräsmeißelüberwachungsvorrichtung bezeichnet werden. Erreicht der Verschleiß ein kritisches Niveau oder fällt ein Fräsmeißel, z. B. durch eine mechanische Beschädigung oder einen Bruch, aus, so verändert sich das erzeugte Fräsbild. Dies wird von der Auswerteeinrichtung anhand der Auswertung des erfassten Fräsbildes automatisch erkannt und dem Maschinenführer angezeigt. Bevorzugt umfasst hierzu die Überwachungsvorrichtung eine Anzeigeeinrichtung, wie z. B. eine Signalleuchte oder ein Bildschirmgerät (Monitor). Ferner kann die Auswerteeinrichtung mit der Maschinensteuerung gekoppelt sein (bspw. über einen maschinenbasierten CAN-Bus) und ein Stillsetzen der Bodenfräsmaschine veranlassen, wenn ein unzulässiger Verschleiß an einem Fräsmeißel oder der Ausfall wenigstens eines Fräsmeißels erkannt wurde. Ebenso ist denkbar, dass der Vorschub oder die Fräswalzedrehzahl angepasst wird. Ferner ist denkbar, dass die Auswerteeinrichtung den fortschreitenden Verschleiß eines Fräsmeißels prognostiziert und der Maschinenführer bereits vorzeitig über einen anstehenden Austausch informiert wird. Durch einen rechtzeitigen Austausch können auch Folgeschäden an der Fräswalze und deren Meißelhalterungen vermieden werden. Ergänzend kann zudem vorgesehen sein, dass das erfasste Fräsbild und/oder das Auswertungsergebnis in einer Speichereinrichtung abgespeichert werden, was z. B. der Qualitätssicherung dient. Insbesondere kann auch die Entstehung eines unerwünschten Fischgrätenmusters überwacht und durch Einleiten von Gegenmaßnahmen vermieden werden.

Erfindungsgemäß ist die Auswerteeinrichtung dazu ausgebildet, anhand des erfassten Fräsbildes die exakte Position eines verschlissenen und/oder ausgefallenen Fräsmeißels an der Fräswalze zu ermitteln. Die ermittelte Position eines auszuwechselnden Fräsmeißels kann dem Maschinenführer bspw. auf der Anzeigeeinrichtung angezeigt werden. Hierdurch kann die anfallende Standzeit der Bodenfräsmaschine für Wartungsarbeiten deutlich verkürzt werden.

Nach einer bevorzugten Weiterbildung ist vorgesehen, dass die Erfassungseinrichtung auf dem Prinzip einer optischen Abtastung des von der Fräswalze bzw. Fräsmeißeln erzeugten Fräsbildes basiert, bzw. nach diesem Prinzip arbeitet. Bevorzugt ist hierbei vorgesehen, dass die Erfassungseinrichtung wenigstens eine Kamera aufweist und dass die Auswerteeinrichtung ein Bildverarbeitungsmodul umfasst (dies kann auch ein Softwaremodul sein), welches z. B. aufgrund von Kontrast-, Helligkeits- und/oder Farbunterschieden in dem erfassten Fräsbild den Verschleiß und/oder Ausfall wenigstens eines Fräsmeißels ermittelt bzw. detektiert oder auch prognostiziert. Insbesondere lassen sich auf diese Weise auf einen Meißelbruch zurückzuführende Materialerhöhungen im Fräsbild detektieren. Diese Vorgehensweise kann auch ein photogrammetrisches Verfahren umfassen.

Nach einer bevorzugten Weiterbildung ist vorgesehen, dass die Erfassungseinrichtung auf dem Prinzip einer Laserabtastung des von der Fräswalze bzw. Fräsmeißeln erzeugten Fräsbildes basiert, bzw. nach diesem Prinzip arbeitet. Hierbei wird das von der Fräswalze bzw. den Fräsmeißeln erzeugte Fräsbild bspw. linienförmig und quer zur Fräsrichtung abgetastet. Anstelle einer Laserabtastung kann auch eine Lichtpunktabtastung (mittels einer optischen Abtasteinrichtung) oder dergleichen vorgesehen sein. Das mittels Laserabtastung erfasste Fräsbild wird, wie zuvor bereits erläutert, der Auswerteeinrichtung zugeführt, welche das erfasste Fräsbild insbesondere in Hinblick auf Verschleißerscheinungen und/oder Ausfallerscheinungen an den Fräsmeißeln auswertet. Insbesondere lassen sich auf diese Weise auf einen Meißelbruch zurückzuführende Materialerhöhungen im Fräsbild detektieren. Laserabtasteinrichtungen (Laser-Scanner) sind als im Wesentlichen verbaufertige Module am Markt erhältlich. Die vorgeschlagene Anwendung ist aus dem Stand der Technik jedoch nicht bekannt.

Nach einer bevorzugten Weiterbildung ist vorgesehen, dass die Erfassungseinrichtung auf dem Prinzip einer Schallwellenabtastung des von der Fräswalze bzw. den Fräsmeißeln erzeugten Fräsbildes basiert, bzw. nach diesem Prinzip arbeitet. Die Weiterverarbeitung des erfassten Fräsbildes erfolgt wie zuvor erläutert. Bei dieser Schallwellenabtastung kann es sich z. B. um eine Ultraschallwellen-Abtastung handeln. Schallwellenabtasteinrichtungen (Schallwellen-Scanner) sind als im Wesentlichen verbaufertige Module am Markt erhältlich. Die vorgeschlagene Anwendung ist aus dem Stand der Technik jedoch nicht bekannt.

Nach einer ebenso bevorzugten Weiterbildung ist vorgesehen, dass Erfassungseinrichtung auf dem Prinzip einer Funkwellenabtastung des von der Fräswalze bzw. den Fräsmeißeln erzeugten Fräsbildes basiert bzw. nach diesem Prinzip arbeitet. Die Weiterverarbeitung des erfassten Fräsbildes erfolgt wie zuvor erläutert. Bei dieser Funkwellenabtastung kann es sich z. B. um eine Radiowellen-Abtastung handeln. Funkwellenabtasteinrichtungen, wie insbesondere Radiowellen-Scanner, sind als im Wesentlichen verbaufertige Module am Markt erhältlich. Die vorgeschlagene Anwendung ist aus dem Stand der Technik jedoch nicht bekannt.

In einer bevorzugten Ausbildung ist vorgesehen, dass die Erfassungseinrichtung und die Auswerteeinrichtung auch dazu ausgebildet sind, das Profil und insbesondere das Deckprofil einer Bodenstruktur zu erfassen. Hierbei kann es sich insbesondere um das Deckprofil eines Straßenquerschnitts an einem bestimmten Streckenpunkt handeln. Gegebenenfalls kann auch der Verlauf dieses Deckprofils in Verlaufsrichtung (z. B. in der Straßenlängsrichtung) ermittelt werden. Dies kann unabhängig von einer Erfassung und Auswertung eines erzeugten Fräsbildes erfolgen. Von besonderem Interesse ist hierbei die so genannte Dachneigung eines Straßenquerschnitts. Das ermittelte Deckprofil kann dem Maschinenführer auf der Anzeigeeinrichtung angezeigt und/oder in der Speichereinrichtung abgespeichert werden.

Ferner wird auch für eine Bodenfräsmaschine gemäß dem weiteren unabhängigen Anspruch Schutz beansprucht, die wenigstens eine erfindungsgemäße Überwachungsvorrichtung nach den vorausgehenden Erläuterungen aufweist. Eine solche Bodenbearbeitungsmaschine kann eine Bodenstabilisiermaschine, eine Bodenrecyclingmaschine oder insbesondere eine Straßenfräse sein. Bevorzugt ist vorgesehen, dass eine solche Bodenfräsmaschine derart ausgebildet ist, dass bei einer von der Überwachungsvorrichtung erkannten Verschlechterung

(z. B. deutliche Abweichung von einer Sollvorgabe) des Fräsbilds automatisch über ein Steuergerät eine Anpassung des Vorschubs und/oder der Fräswalzendrehzahl erfolgt, was z. B. in einem Regelkreis durchgeführt werden kann. Hiermit lassen sich vor allem auch unerwünschte Fischgrätenmuster beim Feinfräsen und/oder beim Fräsen mit geringen Frästiefen vermeiden. Die Kopplung zwischen der erfindungsgemäßen Überwachungsvorrichtung und dem Steuergerät erfolgt z. B. über einen maschineninternen CAN-Bus.

Die Erfindung wird nachfolgend anhand der Figuren beispielhaft und in nicht einschränkender Weise näher erläutert. Es zeigen schematisch:
- Fig. 1: eine Bodenfräsmaschine im Fräsprozess in einer Seitenansicht;
- Fig. 2: ein mit der Bodenfräsmaschine der Fig. 1 erzeugtes Fräsbild in einer perspektivischen Ansicht;
- Fig. 3: eine erfindungsgemäße Überwachungsvorrichtung in einer Blockdarstellung; und

Fig. 4 die Verwendung einer erfindungsgemäßen Überwachungsvorrichtung zur Ermittlung des Deckprofils eines Straßenquerschnitts in einer Schnittansicht.

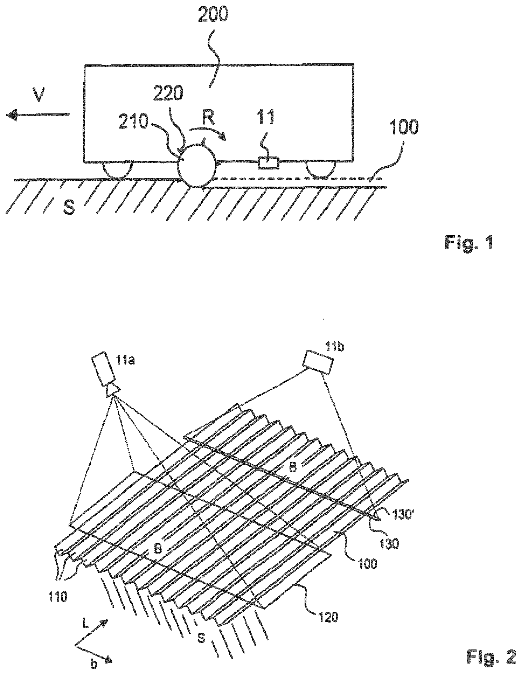

Fig. 1 zeigt eine an und für sich bekannte Bodenfräsmaschine 200 mit einer Fräswalze 210 (siehe z. B. DE 102 03 732 A1). Die Fräswalze 210 dient dem Abtragen einer Bodenoberfläche, wobei durch den Abtrag ein so genanntes Fräsbild in der Bodenstruktur S (z. B. in einem Straßenbelag) erzeugt wird. Die Bodenfräsmaschine 200 bewegt sich in der Vorschubrichtung V relativ zu der Bodenstruktur S, wobei mittels der in Richtung R rotierenden Fräswalze 210 und den daran angeordneten Fräsmeißeln 220 die Bodenoberfläche der Bodenstruktur S mit einer definierten Höhe abgetragen bzw. abgefräst wird. Das durch den Materialabtrag erzeugte Fräsbild ist mit 100 bezeichnet. Das erzeugte Fräsbild 100 kann erfindungsgemäß mit wenigstens einer bezüglich der Vorschubrichtung bzw. Fräsrichtung V hinter der Fräswalze 210 angeordneten Erfassungseinrichtung 11 berührungslos erfasst und mittels einer Auswerteeinrichtung automatisiert ausgewertet werden, wie nachfolgend näher erläutert.

Fig. 2 zeigt beispielhaft das von der Fräswalze 210 erzeugte Fräsbild 100. Das Fräsbild 100 hat eine Fräslängsrichtung L, die der Vorschubrichtung bzw. Fräsrichtung V der Fräswalze 210 im Fräsprozess entspricht. In Längsrichtung L weist das Fräsbild 100 eine Vielzahl von parallel orientierten Rillen bzw. Furchen 110 auf, die mittels der Fräswalze 210 und genau genommen mittels der daran angeordneten Fräsmeißel 220 oder Fräsmesser in die Bodenstruktur S eingebracht worden sind.

Bei Verschleiß und/oder bei Ausfall eines oder mehrerer Fräsmeißel verändert sich das erzeugte Fräsbild 100. Bei Verschleiß kann es zu einer Verringerung der Furchentiefe und/oder zur Veränderung der Furchenquerschnittsform kommen. Ein Meißelbruch kann zu einer so genannten Materialerhöhung führen (vgl. DE 102 03 732 A1), da das Bodenmaterial im Bereich des beschädigten Fräsmeißels nicht mehr genügend abgetragen wird. Beides ist unerwünscht. Erfindungsgemäß wird daher vorgeschlagen, das von der Fräswalze 210 erzeugte Fräsbild 100 berührungslos zu erfassen und das erfasste Fräsbild hinsichtlich des Verschleißes und/oder des Ausfalls wenigstens eines Fräsmeißels 220 automatisch auszuwerten. Nach einem weiteren Aspekt der Erfindung kann auch die Qualität des erzeugten Fräsbildes 100 automatisch beurteilt werden.

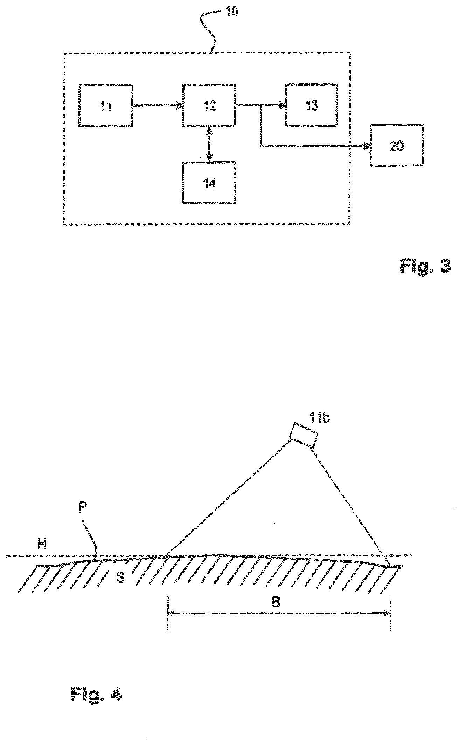

Die Erfassung des erzeugten Fräsbildes 100 kann z. B. mittels wenigstens einer optischen Erfassungseinrichtung erfolgen, zu der insbesondere wenigstens eine Kamera 11a gehört. Mittels dieser Kamera 11a wird das erzeugte Fräsbild 100 nachfolgend seiner Einbringung in die Bodenstruktur S in einem z. B. rechteckförmigen Bereich 120 erfasst. Diese Erfassung kann kontinuierlich oder diskontinuierlich erfolgen, wie oben bereits erläutert. Mit B ist die Erfassungsbreite in Querrichtung b bezeichnet. Die Kamera 11a ist an der Bodenfräsmaschine 200 bezüglich der Fortbewegungsrichtung V hinter der Fräswalze 210 derart angeordnet, dass diese den Erfassungsbereich 120 optisch erfassen kann. Eine bezüglich des Erfassungsbereichs 120 flächenmittige und orthogonale Anordnung ist hierbei nicht zwingend erforderlich. Das von der Kamera 11a erfasste Fräsbild wird einer Auswerteeinrichtung 12 (vgl. Fig. 3) zugeführt, wie nachfolgend noch näher erläutert.

Alternativ und/oder ergänzend kann die Erfassung des erzeugten Fräsbildes 100 auch mittels wenigstens einer Laserabtasteinrichtung 11 b erfolgen, welche das erzeugte Fräsbild 100 nachfolgend seiner Einbringung in die Bodenstruktur S z. B. wiederholt in Querrichtung b bzw. quer zur Längserstreckungsrichtung L linienförmig abtastet, was in Fig. 2 mit den Linien 130 und 130' angedeutet ist. Für die Befestigung der Laserabtasteinrichtung 11 b an der Bodenfräsmaschine 200 gelten analog die vorausgehenden Erläuterungen die Kamera 11 a betreffend.

Fig. 3 zeigt schematisch eine insgesamt mit 10 bezeichnete erfindungsgemäße Überwachungsvorrichtung. Zur Überwachungsvorrichtung 10 gehören eine Erfassungseinrichtung 11, welche z. B. eine Kamera 11a und/oder eine Laserabtasteinrichtung (Laser-Scanner) 11b umfassen kann. Im Zusammenhang mit der in Fig. 1 gezeigten Bodenfräsmaschine 200 wird das von der Erfassungseinrichtung 11 erfasste Fräsbild nachfolgend oder zeitgleich an eine Auswerteeinrichtung 12 übergeben. Bei der Auswerteeinrichtung 12 handelt es sich insbesondere um einen Computer oder eine Mikroprozessoreinrichtung. Gegebenenfalls ist es erforderlich, das von der Erfassungseinrichtung 11 erfasste Fräsbild vor der Weitergabe an eine Auswerteeinrichtung 12 aufzubereiten. Die Auswerteeinrichtung 12 wertet das erfasste Fräsbild aus. Hierbei kann vorgesehen sein, dass das erfasste Fräsbild mit einem kurzzeitig vorher erfassten und zwischengespeicherten Fräsbild oder mit einem in einer Speichereinrichtung 14 hinterlegten Fräsbild verglichen wird. Bei der automatisierten Auswertung in der Auswerteeinrichtung 12 kann ein unzulässiger Verschleiß eines oder mehrerer Fräsmeißel oder sogar ein Ausfall (Meißelbruch) automatisch erkannt, gegebenenfalls sogar auch prognostiziert, und dem Maschinenführer über eine Anzeigeeinrichtung 13 angezeigt werden. Erfindungsgemäß wird dem Maschinenführer hierbei auch angezeigt, wo sich der betreffende Fräsmeißel 220 an der Fräswalze 210 befindet. Der Maschinenführer kann nun die Bodenfräsmaschine 200 stillsetzen und den defekten Fräsmeißel 220 oder die komplette Fräswalze 210 auswechseln. Evtl. kann auch eine Kopplung der Auswerteeinrichtung 12 mit einem Steuergerät 20 der Bodenfräsmaschine 200 vorgesehen sein, wodurch es z. B. möglich ist, die Bodenfräsmaschine 200 bei unzulässiger Verschlechterung des erzeugten Fräsbildes 100, bspw. aufgrund eines übermäßigen Meißelverschleißes oder eines Meißelbruches, automatisiert still zu setzen oder deren Betriebsparameter in geeigneter Weise zu verändern.

Bevorzugt ist in der Auswerteeinrichtung 12 auch eine automatisierte Auswertung hinsichtlich der Qualität des erzeugten Fräsbildes 100 möglich. Das erfasste Fräsbild und/oder das Ergebnis der Auswertung kann z. B. zur Qualitätssicherung in der Speichereinrichtung 14 gespeichert werden.

Gemäß einer bevorzugten Weiterbildung kann die erfindungsgemäße Überwachungsvorrichtung 10 auch eingesetzt werden, um das Profil und insbesondere Deckprofil einer Bodenstruktur S und insbesondere das Deckprofil eines Straßenquerschnitts zu ermitteln und/oder zu überwachen. Dies zeigt Fig. 4. Das von einer Horizontalen H abweichende Deckprofil P der Bodenstruktur S wird über die Erfassungsbreite B (in Querrichtung b; vgl. Fig. 2) in bevorzugter Weise von einer Laserabtasteinrichtung 11b erfasst und in der Auswerteeinrichtung 12 ausgewertet. Das ermittelte Deckprofil P kann dem Maschinenführer auf der Anzeigeeinrichtung 13 angezeigt und/oder in der Speichereinrichtung 14 abgespeichert werden. Gegebenenfalls kann ein z. B. durch Abfräsen (bspw. mit der in Fig. 1 gezeigten Bodenfräsmaschine 200) erzeugtes und mit der Überwachungsvorrichtung 10 überwachtes Profil P auch in einem Regelkreis an eine Sollvorgabe angepasst werden.

## Patentansprüche

1. Überwachungsvorrichtung (10) für eine Bodenbearbeitungsmaschine (200), wobei diese Bodenbearbeitungsmaschine als eine Bodenfräsmaschine (200) ausgeführt ist und wenigstens eine mit einer Vielzahl von Fräsmeißeln (220) bestückte Fräswalze (210) für die mechanische Bearbeitung einer Bodenoberfläche aufweist, umfassend:
- wenigstens eine Erfassungseinrichtung (11), zur berührungslosen und zumindest bereichsweisen Erfassung eines von der Fräswalze (210) erzeugten Fräsbildes (100), und
- eine Auswerteeinrichtung (12), zur automatisierten Auswertung der von der Erfassungseinrichtung (11) erfassten Beschaffenheit,
**dadurch gekennzeichnet,**
**dass** die Auswerteeinrichtung (12) dazu ausgebildet ist, den Verschleiß und/oder den Ausfall wenigstens eines Fräsmeißels (220) anhand des Vergleichs eines momentan erfassten Fräsbildes mit einem zeitlich früher erfassten Fräsbild zu ermitteln und anhand des erfassten Fräsbildes die exakte Position eines verschlissenen und/oder ausgefallenen Fräsmeißels (220) an der Fräswalze (210) zu ermitteln.

2. Überwachungsvorrichtung (10) gemäß Anspruch 1,
**dadurch gekennzeichnet,**
**dass** die Erfassungseinrichtung (11) auf dem Prinzip einer optischen Abbildung oder Abtastung basiert.

3. Überwachungsvorrichtung (10) gemäß Anspruch 2,
**dadurch gekennzeichnet,**
**dass** die Erfassungseinrichtung (11) wenigstens eine Kamera (11a) aufweist und die Auswerteeinrichtung (12) ein Bildverarbeitungsmodul umfasst.

4. Überwachungsvorrichtung (10) gemäß Anspruch 1,
**dadurch gekennzeichnet,**
**dass** die Erfassungseinrichtung (11) auf dem Prinzip einer Abtastung mittels Laser, Infrarot, Schall oder Röntgenstrahlung basiert.

5. Überwachungsvorrichtung (10) gemäß einem der vorausgehenden Ansprüche,
**dadurch gekennzeichnet,**
**dass** die Erfassungseinrichtung (11) auf dem Prinzip einer flächigen Abbildung, flächigen Abtastung und/oder linienförmigen Abtastung basiert.

6. Überwachungsvorrichtung (10) gemäß einem der Ansprüche 2 bis 6,
**dadurch gekennzeichnet,**
**dass** die Erfassungseinrichtung (11) wenigstens eine Kamera (11a) aufweist und die Auswerteeinrichtung (12) ein Bildverarbeitungsmodul umfasst, welches aufgrund von Kontrast-, Helligkeits- und/oder Farbunterschieden in einem erfassten Fräsbild den Verschleiß und/oder Ausfall eines Fräsmeißels (220) ermitteln kann.

7. Überwachungsvorrichtung (10) gemäß einem der vorausgehenden Ansprüche,
**dadurch gekennzeichnet,**
**dass** die Erfassungseinrichtung (11) und die Auswerteeinrichtung (12) dazu ausgebildet sind, das Deckprofil (P) eines Straßenquerschnitts zu ermitteln.

8. Bodenfräsmaschine (200), mit wenigstens einer Überwachungsvorrichtung (10) gemäß einem der vorausgehenden Ansprüche.

9. Bodenfräsmaschine (200) nach Anspruch 8, die derart ausgebildet ist, dass bei einer von der Überwachungsvorrichtung (10) erkannten Verschlechterung des erzeugten Fräsbilds (100) automatisch über ein Steuergerät (20) eine Anpassung des Vorschubs (V) und/oder der Fräswalzendrehzahl (R) erfolgt.

## Claims

1. A monitoring apparatus (10) for a ground processing machine (200), with said ground processing machine being implemented as a ground milling machine (200) and comprising at least one milling drum (210) having a plurality of milling chisels (220) for mechanically processing a ground surface, comprising:
- at least one detection device (11) for contactless detection at least in sections of a condition of a milling texture (100) produced by the milling drum (210), and
- an evaluation device (12) for the automated evaluation of the condition detected by the detection device (11),
**characterized in that**
the evaluation device (12) is adapted to ascertain the wear and tear and/or the failure of at least one milling chisel (220) on the basis of the comparison between a momentarily detected milling texture and a milling texture detected at an earlier point in time and to determine the exact position of a worn and/or failed milling chisel (220) on the milling drum (210) on the basis of the acquired milling image.

2. A monitoring apparatus (10) according to claim 1,
**characterized in that**
the detection device (11) is based on the principle of optical imaging or scanning.

3. A monitoring apparatus (10) according to claim 2,
**characterized in that**
the detection device (11) comprises at least one camera (11a) and the evaluation device (12) comprises an image processing module.

4. A monitoring apparatus (10) according to claim 1,
**characterized in that**
the detection device (11) is based on the principle of scanning by means of laser, infrared, sound or x-rays.

5. A monitoring apparatus (10) according to any one of the preceding claims,
**characterized in that**
the detection device (11) is based on the principle of planar imaging, planar scanning and/or linear scanning.

6. A monitoring apparatus (10) according to anyone of claims 2 to 6,
**characterized in that**
the detection device (11) comprises at least one camera (11a) and the evaluation device (12) comprises an image processing module which is capable of ascertaining the wear and tear and/or the failure of a milling chisel (220) on the basis of differences in contrast, brightness and/or color in a detected milling texture.

7. A monitoring apparatus (10) according to any one of the preceding claims ,
**characterized in that**
the detection device (11) and the evaluation device (12) are adapted to ascertain the cover profile (P) of a road cross section.

8. A ground milling machine (200), comprising at least one monitoring apparatus (10) according to any one of the preceding claims.

9. A ground milling machine (200) according to claim 8, which is adapted in such a manner that an adjustment of the advancement (V) and/or the milling drum speed (R) is performed automatically via a control device (20) following a deterioration in the produced milling texture (100) as recognized by the monitoring apparatus (10).

## Revendications

1. Dispositif de surveillance (10) pour une machine (200) de traitement du sol, ladite machine de traitement du sol étant mise en œuvre sous forme d'une machine (200) de fraisage du sol et comprenant au moins un cylindre de fraisage (210) muni d'une pluralité de pics de fraisage (220) pour traiter mécaniquement une surface du sol, comprenant :
- au moins un dispositif de détection (11) pour une détection sans contact, au moins par sections, de l'état d'une texture fraisée (100) produite par le cylindre de fraisage (210), et
- un dispositif d'évaluation (12) pour l'évaluation automatisée de l'état détecté par le dispositif de détection (11),
***caractérisé en ce que***
le dispositif d'évaluation (12) est apte à vérifier l'usure et/ou la défaillance d'au moins un pic de fraisage (220) sur la base de la comparaison entre une texture fraisée détectée à un instant donné et une texture fraisée détectée à un instant antérieur et à vérifier la position précise d'un pic de fraisage (220) usé et/ou endommagé sur le cylindre de fraisage (210) sur la base de la texture fraisée détectée.

2. Dispositif de surveillance (10) selon la revendication 1,
***caractérisé en ce que***
le dispositif de détection (11) est basé sur le principe de l'imagerie ou du balayage optique.

3. Dispositif de surveillance (10) selon la revendication 2,
***caractérisé en ce que***
le dispositif de détection (11) comprend au moins un appareil de prise de vues (11a) et le dispositif d'évaluation (12) comprend un module de traitement d'images.

4. Dispositif de surveillance (10) selon la revendication 1,
***caractérisé en ce que***
le dispositif de détection (11) est basé sur le principe du balayage laser, infrarouge, sonore, ou par rayons X.

5. Dispositif de surveillance (10) selon l'une quelconque des revendications précédentes,
***caractérisé en ce que***
le dispositif de détection (11) est basé sur le principe de l'imagerie en mode planaire, du balayage planaire et/ou du balayage linéaire.

6. Dispositif de surveillance (10) selon l'une quelconque des revendications 2 à 6,
***caractérisé en ce que***
le dispositif de détection (11) comprend au moins un appareil de prise de vues (11a) et le dispositif d'évaluation (12) comprend un module de traitement d'images qui est apte à vérifier l'usure et/ou la défaillance d'un pic de fraisage (220) sur la base de différences en matière de contraste, de luminosité et/ou de couleur dans une texture fraisée détectée.

7. Dispositif de surveillance (10) selon l'une quelconque des revendications précédentes,
***caractérisé en ce que***
le dispositif de détection (11) et le dispositif d'évaluation (12) sont aptes à vérifier le profil de revêtement (P) d'une section transversale de route.

8. Machine (200) de fraisage du sol, comprenant au moins un dispositif de surveillance (10) selon l'une quelconque des revendications précédentes.

9. Machine (200) de fraisage du sol selon la revendication 8, qui est adaptée de telle façon qu'un réglage de l'avance (V) et/ou de la vitesse (R) du cylindre de fraisage soit effectué automatiquement par l'intermédiaire d'un dispositif de commande (20) à la suite d'une détérioration dans la texture fraisée produite (100) telle que reconnue par le dispositif de surveillance (10).
